# EUROPÄISCHE PATENTSCHRIFT

(11) **EP 2 168 887 B1**
(45) Veröffentlichungstag und Bekanntmachung des Hinweises auf die Patenterteilung: **11.07.2012**
(21) Anmeldenummer: 09009527.4
(22) Anmeldetag: 22.07.2009
(51) Int. Cl.: B65D 33/16

(54) **Bioclip**
Bioclip
Bioclip

(30) Priorität: 25.09.2008 DE 102008048858
(43) Veröffentlichungstag der Anmeldung: 31.03.2010
(73) Patentinhaber: Poly-clip System GmbH & Co. KG, 60489 Frankfurt am Main (DE)
(72) Erfinder: Meyrahn, Joachim, 64390 Erzhausen (DE); Hein, Klaus, 63688 Gedern (DE)
(74) Vertreter: Eisenführ, Speiser & Partner

(56) Entgegenhaltungen:
- EP-A1- 0 081 250
- DE-A1- 1 761 504
- DE-A1- 3 715 626
- DE-U1- 20 117 733
- JP-A- 2008 025 805
- US-A- 3 584 347
- US-A1- 2002 132 960

## Beschreibung

Die vorliegende Erfindung betrifft eine Verschlussklammer zum Verschließen von schlauch- oder beutelartigem, Verpackungsmaterial.

Im Besonderen betrifft die vorliegende Erfindung eine Verschlussklammer zum Verschließen von schlauch- oder beutelartigem, Verpackungsmaterial mit zwei identischen, eine Klammerebene aufspannenden und durch einen Verbindungsabschnitt verbundenen Schenkeln gemäß dem Oberbegriff des Anspruchs 1.

In der Praxis ist es bekannt, dass bei der Herstellung von in wurstförmigen oder schlauchbeutelartigen Verpackungshüllen verpackte Produkte, wie beispielsweise Wurstprodukten, das für das Wurstprodukt vorgesehene Füllgut in Form von Wurstbrät von einer Füllmaschine über ein Füllrohr einer Clipmaschine zugeführt wird. In der Clipmaschine wird das Füllgut in ein durch eine erste Verschlussklammer bzw. einen ersten Clip einseitig verschlossenes, schlauchförmiges Verpackungshüllenmaterial abgefüllt und das schlauchförmige Verpackungshüllenmaterial durch Setzen eines zweiten Clips verschlossen. Die Verschließwerkzeuge umfassen dabei paarweise jeweils einen Stempel und eine Matrize, zwischen welchen der Clip während des Verschließens bis zum Erreichen des minimalen Abstandes der Verschließwerkzeuge umgeformt wird. Nach dem Verschließen werden die Verschließwerkzeuge in ihrer Ausgangs- oder Öffnungsstellung zurückbewegt. Anschließend wird das Verpackungshüllenmaterial des nun entstandenen Wurstprodukts von dem Vorrat des übrigen Verpackungshüllenmaterials abgetrennt und das so fertiggestellte Wurstprodukt aus der Clipmaschine ausgetragen.

An die Qualität eines solchen Verschlusses werden hohe Anforderungen gestellt. Einerseits darf er nicht so fest sein, dass die Verpackungshülle beim Verschließen beschädigt wird. Andererseits muss der Verschluss aber ausreichend fest und dicht sein, so dass beispielsweise bei einem nachfolgenden weiteren Bearbeitungsschritt des verschlossenen Wurstprodukts, wie beispielsweise ein Garen, Räuchern usw. dieser nicht von dem Verpackungshüllenmaterial abrutscht und/oder Wurstbrät aus dem Verpackungshüllenmaterial austritt. Verschlussclips wurden daher bisher üblicherweise aus Metall gefertigt. Neben diesen Anforderungen an die Verschlusssicherheit wird aber zunehmend auch auf die Umweltverträglichkeit, wie die Recyclingfähigkeit oder die Verrottbarkeit der verwendeten Materialien, geachtet.

Derartige Verschlussklammern sind beispielsweise aus der DE-Offenlegungsschrift 31 48 757 bekannt. Diese Verschlussklammern bzw. Clips werden aus einem Metallstrang, z.B. aus Aluminium, gefertigt, U-förmig vorgebogen und mittels in Form der abgekröpften Schenkelenden gebildeten Verbindungsstege, als Clipstrang zusammenhängend einem ersten Verschließwerkzeug der Clipmaschine, wie z.B. der Matrize, zugeführt. Metall als Werkstoff bietet die nötigen Festigkeitseigenschaften, zu einer ordnungsgemäßen Entsorgung müssten Metallklammern jedoch von der Verpackungshülle getrennt entsorgt werden. Ein weiterer Nachteil sind die beim Verschließen der Metallclips notwendigen hohen Verschlusskräfte, die einen erhöhten Energieaufwand und starken Verschleiß zur Folge haben.

Die in der DE-Offenlegungsschrift 201 17 733 offenbarten Verschlussklammern sind aus einem federelastischen Kunststoff gefertigt. Zum Aufrechterhalten einer Verschlusskraft weisen die als Klemmfinger und Klemmnut ausgestalteten Schenkel dieser Verschlussklammern außen- bzw. innenliegende Rast- und Gegenrastelemente auf, die sich beim Verschließen der Verschlussklammern ineinander verhaken, wenn der Klemmfinger in die Klemmnut eingreift. Diese bekannte Kunststoff-Verschlussklammer ist durch ihren speziellen Verschluss nicht auf herkömmlichen Clipmaschinen verwendbar, da spezielle Führungsvorrichtungen vorgesehen werden müssen, um einen korrekten Eingriff des Klemmfingers in die Klemmnut zu erreichen. Da es sich um einen federelastischen Kunststoff handelt, wird hier erst durch die Verrastung ein sicherer Verschluss gewährleistet.

Weiterhin ist aus der DE 601 06 596 bekannt, Kunststoffteile, wie Griffe, Folien, Verschlussteile u.ä., aus Kunststoffen herzustellen. Diese Kunststoffe sind Gemische aus Polyestern und Zusätzen, wie Cellulose oder Stärke. Vor allem faserige Zusätze verbessern hier die Festigkeit dieser Gemische. Zur Verbesserung der biologischen Abbaubarkeit werden die abbaubaren Zusätze in hohen Anteilen, bis 95%, zugegeben.

Aufgabe der vorliegenden Erfindung ist es, diese Nachteile zu überwinden und eine Verschlussklammer zur Verfügung zu stellen, die leichter zu verarbeiten ist und besser zu entsorgen ist.

Die vorliegende Aufgabe wird bezüglich der Verschlussklammer bzw. des Clips durch die Merkmale des Anspruchs 1 gelöst. In den sich jeweils anschließenden Unteransprüchen finden sich entsprechende vorteilhafte Ausführungen.

Insbesondere wird eine Verschlussklammer zum Verschließen von schlauch-oder beutelartigem Verpackungsmaterial mit zwei identischen, eine Klammerebene aufspannenden und durch einen Verbindungsabschnitt verbundenen Schenkeln vorgeschlagen. Die erfindungsgemäße Verschlussklammer besteht dabei aus einem Kunststoff und ist durch einen Kaltumform-Prozess verschließbar, wobei der Kunststoff biologisch verrottbar ist. Dadurch müssen die Clips bei der Verwendung von z.B. Naturdärmen als Wursthülle nicht von diesen getrennt entsorgt werden.

Durch die Verwendung von Kunststoff können die zum Verschließen der Verschlussklammer bzw. des Clips notwendigen Kräfte gegenüber Metallklammern deutlich verringert werden. Weiterhin erlaubt die Kaltumformbarkeit der erfindungsgemäßen Verschlussklammer bei entsprechender Ausgestaltung eine Verarbeitung auf bestehenden Clipmaschinen. Es ist daher prinzipiell möglich, sowohl s.g. R-Clips, also als Clipstrang an abgekröpften Enden miteinander verbundene Verschlussklammern oder Clips, als auch s.g. S-Clips, U-förmige, als Clipstange deckungsgleich aneinandergereihte Clips, zu verarbeiten.

Zur Gewährleistung der Verrottbarkeit ist dem Kunststoff ein Verrottungsbeschleuniger beigemischt, der den Verrottungsvorgang unter bestimmten Umgebungsbedingungen startet und aufrechterhält. Die Verrottungsgeschwindigkeit von Kunststoffen ist bei Verwendung eines solchen Verrottungsbeschleunigers deutlich höher als bei einer natürlichen Verrottung, wenn diese denn überhaupt stattfindet.

In einer weiterhin vorteilhaften Ausführung ist die Verrottungsgeschwindigkeit einstellbar. Dies kann auf verschiedene Weise geschehen, bspw. durch die Verwendung verschiedener Arten von Verrottungsbeschleunigers und/oder deren Menge. Es ist bevorzugt, dass nur ein Verrottungsbeschleuniger verwendet wird und dass die Verrottungsgeschwindigkeit über die Höhe des Anteils an Verrottungsbeschleuniger einstellbar ist. Die Verwendung nur eines Verrottungs-beschleunigers erleichtert den Herstellungsprozess und senkt Herstellungskosten. Vorteilhafterweise kann dabei vorgesehen werden, dass der Verrottungsbeschleuniger ein Pro-Oxidant ist.

Es hat sich gezeigt, dass der Anteil des Verrottungsbeschleunigers vorteilhaft in einem Bereich zwischen 0,1% und 30% liegt, vorzugsweise zwischen 1% und 10%, wobei ein Bereich zwischen 1 % und 4% als besonders bevorzugt angesehen wird. Da ein geringer Anteil an Verrottungsbeschleuniger ausreicht, um eine ausreichend hohe Verrottungsgeschwindigkeit zu erreichen, werden hierdurch die mechanischen Eigenschaften des verwendeten Kunststoffs nicht nennenswert beeinflusst.

In bevorzugter Ausgestaltung ist der Kunststoff ein thermoplastischer Kunststoff.

Als geeigneter Kunststoff hat sich Polycarbonat herausgestellt. Er ist gut kalt verformbar und besitzt ausreichend gute mechanische Eigenschaften. Alternativ können aber auch andere Thermoplaste, wie z.B. Polyolefine, insb. Polypropylen aber auch Polyethylen verwendet werden.

Die Herstellung der erfindungsgemäßen Clips erfolgt derart, dass einem Extruder zunächst ein Granulat des Kunststoffs zugeführt wird, aus dem dann ein Materialstrang extrudiert wird. Hierfür können herkömmliche Extruder verwendet werden. Dem Granulat wird vor dem Extrudiervorgang vorzugsweise eine entsprechende Menge an Verrottungsbeschleuniger zugesetzt. Der extrudierte Materialstrang wird dann im noch warmen Zustand, vorzugsweise knapp oberhalb der Glasübergangstemperatur, zu einem Clipstrang geformt und anschließend abgekühlt.

Der Herstellungsprozess der erfindungsgemäßen Clips wird beispielhaft an der einzigen Zeichnungsfigur 1 erläutert, die eine schematische Darstellung einer Herstellungsvorrichtung zeigt.

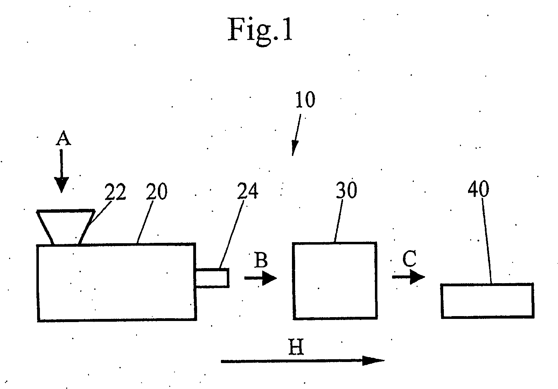

Wie der Fig. 1 entnommen werden kann, weist die Herstellvorrichtung 10 einen Extruder 20 auf, dem eine Umformeinrichtung 30 sowie eine Abkühleinheit 40 nachgeschaltet sind.

Der Extruder 20 besitzt u.a. eine Zuführung für das Kunststoffgranulat A in Form eines schematisch angedeuteten Trichters 22 sowie ein Extrusionswerkzeug, das als Düse 24 ausgebildet ist. In Herstellrichtung H, d.h. in Fig. 1 von links nach rechts, ist dem Extruder 20 ein Umformwerkzeug 30 nachgeschaltet, das den aus dem Extruder austretenden Materialstrang seine endgültige Form gibt.

Zwischen Düse 24 und Umformwerkzeug 30 ist es vorteilhaft, wenn sich noch eine Abkühleinrichtung für den Schmelzestrang befindet, die diesen Schmelzestrang in den gummielastischen Bereich abkühlt.

Während des Umformvorgangs im Umformwerkzeug 30 wird der Materialstrang weiter abgekühlt, und zwar mindestens unter die Glasübergangstemperatur des Kunststoffes.

Dem Umformwerkzeug 30 schließt sich in Herstellrichtung H eine Abkühlvorrichtung 40 an, die den von dem Umformwerkzeug 30 abgegebenen und noch warmen Materialstrang soweit abkühlt, dass er problemlos weiterverarbeitet oder transportiert werden kann.

Zur Herstellung eines Clipstrangs aus den erfindungsgemäßen Clips wird der zu verwendende Kunststoff, hier z.B. Polycarbonat, als Granulat über den Trichter 22 in den an sich bekannten Extruder 20 eingefüllt. Zuvor wird dem Granulat eine bestimmte Menge eines Verrottungsbeschleunigers zugesetzt.

Im Extruder 20, der bspw. ein Schneckenextruder sein kann, werden das Granulat A und der Verrottungsbeschleuniger weiter gemischt, durch Reibung und/oder eine Heizung aufgeschmolzen und verdichtet. Am in Fig. 1 rechten Ende des Extruders 20 ist schematisch ein Extrudierwerkzeug in Form einer Düse 24 dargestellt. Durch die Düse 24 wird die i.d.R. zähflüssige Schmelze aus dem Extruder 20 heraus gepresst. Der Querschnitt der Düse 24 gibt dabei den Strangquerschnitt vor. Der aus der Düse 24 austretende Materialstrang B kann bereits seinen endgültigen Querschnitt besitzen. Vorliegend kann dies ein annähernd rechteckiger Querschnitt sein. Eine Nachbearbeitung wegen eventueller Grate o.ä. ist daher nicht notwendig.

Die Temperatur des aus der Düse 24 austretenden Materialstrangs B liegt oberhalb der Glasübergangstemperatur Tg, die für Polycarbonat bei ca. Tg = 145°C beträgt. Der daher noch immer leicht formbare Materialstrang B wird einer Umformeinrichtung, wie einer Presse, zugeführt.

In der Umformeinrichtung oder Presse 340, die bspw. Stempel und Matrizen enthalten kann, wird der Materialstrang B durch einen entsprechenden Umformprozess in den annähernd wellenförmigen Clipstrang C umgeformt und abgekühlt. Die Presse 340 kann dabei intermittierend oder auch kontinuierlich arbeiten. Neben der erwähnten Presse 340 können für den Umformvorgang auch drehbare Walzen eingesetzt werden.

Der aus der Presse 340 austretende, quasi endlose Clipstrang C hat die endgültige Form von an ihren gekröpften Enden aneinanderhängenden Clips. Da er noch immer eine sehr hohe Temperatur aufweist, wird er um bleibende Verformungen zu vermeiden, einer Kühleinrichtung 40 zugeführt. Diese an sich bekannte Kühleinrichtungen können elektrisch, also mit entsprechenden Kühlelementen arbeiten. Da aber bei Kunststoffen keine Korrosionsgefahr besteht, kann die Kühlanlage 40 im einfachsten Fall mit Wasser als Kühlmittel betrieben werden.

Der fertiggestellte Clipstrang C kann direkt nach Verlassen der Kühleinrichtung auf eine entsprechende Speicherspule aufgewickelt werden. Wird dem Aufwickeln ein Sterilisationsvorgang vorgeschaltet, kann die Speicherspule direkt zur Weiterverarbeitung geschickt werden. Selbstverständlich ist es auch möglich, die Speicherspule ohne Sterilisationsvorgang an einen Kunden oder eine Weiterverarbeitungsstation abzugeben.

Der auf diese Weise hergestellte Clip aus z.B. Polycarbonat besitzt einem Metallclip vergleichbare Festigkeitseigenschaften. Zudem ist er gut kaltverformbar. Dadurch können die erfindungsgemäßen Clips auf bekannten Clipmaschinen verarbeitet werden.

Der Verrottungszusatz ist kurzzeitig bei der Verarbeitung bis zu einer Temperatur von ca. 290°C stabil. Die Glasübergangstemperatur von Polycarbonat beträgt ca. 145°C, darunter ist das Polycarbonat fest. Hierdurch sind fast alle denkbaren Nachbehandlungen der Verpackungen, bei denen der erfindungsgemäße Clip eingesetzt wird, wie bspw. von Wurstprodukten, die häufig gekocht oder geräuchert werden und bei Temperaturen bis ca. 100°C stattfinden problemlos möglich.

Da zu seiner Umformung aber ein deutlich geringerer Kraftaufwand nötig ist, können z.B. Clipmaschinen zur Wurstherstellung bei Verwendung des erfindungsgemäßen Kunststoffclips mit weniger Druck arbeiten. Hierdurch wir zusätzlich Energie eingespart und der Verschleiß der Clipmaschinen reduziert.

Versuche haben gezeigt, dass bereits ein geringer Anteil von nur 1 - 2% an Verrottungsbeschleuniger zu akzeptablen Verrottungszeiten führt. Die Erhöhung dieses Anteils bringt eine annähernd hierzu lineare Verkürzung der Verrottungszeit. Beträgt die Verrottungszeit bei 1 - 2% Verrottungsbeschleunigeranteil ca. 10 Jahre, so halbiert sich diese Zeit unter gleichen Bedingungen bei doppeltem Anteil an Verrottungsbeschleuniger.

Der Verrottungsbeschleuniger enthält unter anderem s.g. Pro-Oxidanten, bspw. Mn-basierende Pro-Oxidanten, die die langkettigen Polymere des verwendeten Kunststoffs aufspalten. Es kommt so zu einem abiotischen Abbau, oder Oxo-Abbau, bei dem die langkettigen Molekühle bis zu einer Kettenlänge aufgespaltet werden, die einen mikrobiotischen Abbau ermöglicht.

Bei dieser Art der Verrottung werden also die Polymere abgebaut und nicht nur verrottbare oder biologisch abbaubare Zusätze.

Für diese Art der Verrottung eignet sich nicht nur das bereits erwähnte Polycarbonat, sondern auch andere Kunststoffe, wie Polyethylen.

Die aus diesen Materialien hergestellten Clips müssen nicht mehr getrennt von der Wursthülle entsorgt werden, sondern können, wenn die Wursthülle ein Naturdarm ist oder aus ein anderen ebenfalls biologisch abbaubaren Material besteht, zusammen mit dieser entsorgt werden. Hierdurch können Entsorgungskosten gesenkt werden. Außerdem wird ein Beitrag zum Umweltschutz geleistet.

Der vorstehend beschriebene erfindungsgemäße Kunststoff kann selbstverständlich auch für andere Produkte als die vorstehend genannten Kunststoffclips eingesetzt werden.

Da er ausreichend gute mechanische Eigenschaften besitzt, können auch andere höher belastete Bauteile aus ihm gefertigt werden, die nur eine begrenzte Lebensdauer ertragen müssen, wie z.B. Schlaufen oder Haken. Wegen seiner guten Verrottungseigenschaften eignet sich der erfindungsgemäße Kunststoff besonders gut für alle Einweganwendungen.

Eine vorzeitige Verrottung ist im Übrigen nicht zu befürchten, da zur Auslösung des Verrottungsvorgangs bestimmte Umgebungsbedingungen herrschen müssen.

## Patentansprüche

1. Verschlussklammer zum Verschließen von schlauch- oder beutelartigem Verpackungsmaterial mit zwei identischen, eine Klammerebene aufspannenden und durch einen Verbindungsabschnitt verbundenen Schenkeln, wobei die Verschlussklammer aus einem Kunststoff besteht und durch einen Kaltumform-Prozess verschließbar ist,
**dadurch gekennzeichnet, dass** der Kunststoff biologisch verrottbar ist.

2. Verschlussklammer nach Anspruch 1,
**dadurch gekennzeichnet, dass** dem Kunststoff ein Verrottungsbeschleuniger beigemischt ist.

3. Verschlussklammer nach einem der Ansprüche 1 oder 2,
**dadurch gekennzeichnet, dass** die Verrottungsgeschwindigkeit einstellbar ist.

4. Verschlussklammer nach Anspruch 2 oder 3,
**dadurch gekennzeichnet, dass** die Verrottungsgeschwindigkeit über die Höhe des Anteils an Verrottungsbeschleuniger einstellbar ist.

5. Verschlussklammer nach einem der Ansprüche 1 bis 4,
**dadurch gekennzeichnet, dass** der Verrottungsbeschleuniger ein Pro-Oxidant ist.

6. Verschlussklammer nach einem der Ansprüche 2 bis 5,
**dadurch gekennzeichnet, dass** der Anteil des Verrottungsbeschleunigers in einem Bereich zwischen 0,1% und 30% liegt, vorzugsweise zwischen 1% und 10%, wobei ein Bereich zwischen 1% und 4% als besonders bevorzugt angesehen wird.

7. Verschlussklammer nach einem der Ansprüche 1 bis 6,
**dadurch gekennzeichnet**, das der Kunststoff ein thermoplastischer Kunststoff ist.

8. Verschlussklammer nach einem der Ansprüche 1 bis 7,
**dadurch gekennzeichnet, dass** der Kunststoff Polycarbonat ist.

9. Verschlussklammer nach einem der Ansprüche 1 bis 7,
**dadurch gekennzeichnet, dass** der Kunststoff ein Polyolefin, z.B. ein Polypropylen oder ein Polyethylen ist.

## Claims

1. Closing clip for closing tube-like or bag-like packing material by two identical legs spanning a clipping plane and being connected by a connecting section, wherein the closing clip is made of a plastic material and is able to be closed by a cold forming process,
**characterized in that**
the plastic material is bio-degradable.

2. Closing clip according to claim 1,
**characterized in that** a degradation accelerator is admixed to the plastic material.

3. Closing clip according to one of the claims 1 or 2,
**characterized in that** the degradation rate is adjustable.

4. Closing clip according to one of the claims 2 or 3,
**characterized in that** the degradation rate is adjustable by means of the proportion of the degradation accelerator.

5. Closing clip according to one of the claims 1 to 4,
**characterized in that** the degradation accelerator is a pro-oxidant.

6. Closing clip according to one of the claims 2 to 5,
**characterized in that** the proportion of the degradation accelerator is in a range of 0,1 % to 30 %, preferably 1 % to 10 %, wherein a range of 1 % to 4 % is considered as particularly preferable.

7. Closing clip according to one of the claims 1 to 6,
**characterized in that** the plastic material is a thermoplastic plastic material.

8. Closing clip according to one of the claims 1 to 7,
**characterized in that** the plastic material is polycarbonate.

9. Closing clip according to one of the claims 1 to 7,
**characterized in that** the plastic material is a polyolefin such as polypropylene or polyethylene.

## Revendications

1. Agrafe de fermeture pour la fermeture de matière d'emballage de type en boyau ou en sachet, ayant deux branches identiques définissant un plan d'agrafe et reliées par une partie de liaison, l'agrafe de fermeture étant en une matière plastique et pouvant être fermée par une opération de déformation à froid,
**caractérisée en ce que** la matière plastique est dégradable biologiquement.

2. Chambre de fermeture suivant la revendication 1, **caractérisée en ce qu'**un accélérateur de dégradation est ajouté à la matière plastique.

3. Chambre de fermeture suivant l'une des revendications 1 ou 2, **caractérisée en ce que** la vitesse de dégradation est réglable.

4. Chambre de fermeture suivant la revendication 2 ou 3, **caractérisée en ce que** la vitesse de dégradation est réglée par le niveau de la proportion d'accélérateur de dégradation.

5. Chambre de fermeture suivant l'une des revendications 1 à 4, **caractérisée en ce que** l'accélérateur de dégradation est un pro-oxydant.

6. Chambre de fermeture suivant l'une des revendications 2 à 5, **caractérisée en ce que** la proportion d'accélérateur de dégradation est dans une plage comprise entre 0,1% et 30%, de préférence entre 1% et 10%, une plage comprise entre 1% et 4% étant considérée comme particulièrement préférée.

7. Chambre de fermeture suivant l'une des revendications 1 à 6, **caractérisée en ce que** la matière plastique est une matière plastique thermoplastique.

8. Chambre de fermeture suivant l'une des revendications 1 à 7, **caractérisée en ce que** la matière plastique est du polycarbonate.

9. Chambre de fermeture suivant l'une des revendications 1 à 7, **caractérisée en ce que** la matière plastique est une polyoléfine, par exemple un polypropylène ou un polyéthylène.
